# EUROPÄISCHE PATENTSCHRIFT

(11) **EP 1 914 173 B1**
(45) Veröffentlichungstag und Bekanntmachung des Hinweises auf die Patenterteilung: **03.06.2009**
(21) Anmeldenummer: 07020196.7
(22) Anmeldetag: 16.10.2007
(51) Int. Cl.: B65D 30/24

(54) **Ventilsack**
Valve sack
Sac à valve

(30) Priorität: 20.10.2006 DE 102006050461
(43) Veröffentlichungstag der Anmeldung: 23.04.2008
(73) Patentinhaber: Mondi AG, 1032 Wien (AT)
(72) Erfinder: Ilausky, Jothen, 38642 Goslar (DE); Wichmann, Hans-Joachim, 48324 Sendenhorst (DE)
(74) Vertreter: Lins, Edgar

(56) Entgegenhaltungen:
- EP-A- 0 767 105
- WO-A-00/12399
- WO-A-99/01353
- DE-A1- 2 921 541
- DE-A1- 3 008 352
- DE-A1- 3 736 238
- DE-C- 934 511
- FR-A- 660 284
- US-A- 3 591 072
- US-A- 5 823 685

## Beschreibung

Die Erfindung betrifft einen Ventilsack mit einem in einer Längsrichtung schlauchförmigen Mantel, der an wenigstens einem Ende mit einem mit Bodenklappen gebildeten Boden abgeschlossen ist, wobei die Bodenklappen vom Mantel an quer zur Längsrichtung verlaufenden Faltlinien zueinander zeigend abgewinkelt sind und sich mit ihren freien Enden überlappen, mit einem die Bodenklappen überdeckenden, aufgeklebten Bodenabdeckblatt und mit einer im Boden ausgebildeten und einen Durchgang zum Sackinneren herstellenden Einfüllöffnung, die auf einen Füllstutzen einer Füllmaschine aufschiebbar ist.

Ventilsäcke dieser Art sind in zahlreichen Ausführungsformen bekannt. Sie werden üblicherweise an aus einem schlauchförmigen Mantel gebildeten Säcken realisiert, deren Böden durch Eckeinschläge und zueinander zeigenden Bodenklappen als Kreuzböden ausgebildet sind.

Ventilsäcke haben die Aufgabe, das möglichst widerstandsfreie Befüllen des Sackes zu ermöglichen, den Sack jedoch nach dem Befüllen - also nach dem Herausziehen des Füllstutzens aus der Einfüllöffnung - möglichst dicht abzuschließen, um ein Ausrieseln des Sackinhalts zu vermeiden. Es ist daher üblich, in den Boden ein schlauchförmiges Ventil einzulegen, das konstruktiv so ausgebildet ist, dass es nach dem Abwerfen des gefüllten Ventilsackes einen Materialfluss vom Sackinneren durch die Einfüllöffnung nach außen hindurch möglichst gut verhindert. Nach dem Abwerfen des gefüllten Ventilsackes liegt das Ventil wegen des Fülldrucks des Füllguts im Allgemeinen flach und öffnet sich nicht selbsttätig, sodass Material aus dem Sackinneren nicht in nennenswerten Mengen aus dem Sack herausgelangt.

DE 3 736 238 zeigt ein Schlauchventil, dessen Dichtheit durch die überlappenden Kanten erhöht wird und die DE 934 511 offenbart die Ausbildung eines Keuzboden Sackes mit Einfüllventil ohne Ventileinsatz.

Es ist ferner bekannt, für das schlauchförmige Ventil Kunststoffmaterial oder mit Kunststoff beschichtetes Material zu verwenden, das durch Ultraschall oder durch hochfrequente elektromagnetische Wellen schweißbar ist, um so einen absolut dichten Verschluss der Einfüllöffnung zu ermöglichen. Ein mit einem derartigen Ventil ausgestatteter Ventilsack kann Probleme bei seiner Entsorgung bzw. seine Rezyklierbarkeit wegen des Kunststoffanteils aufwerfen.

In allen Fällen wird die Herstellung des Ventilsacks durch das Einlegen des schlauchförmigen Ventils in den Boden bei dessen Ausbildung durch Faltung erschwert und verlängert, wodurch die Herstellkosten vergrößert werden.

EP 0 767 105 offenbart einen Ventilsack gemäß dem Oberbegriff des Anspruchs 1.

Der vorliegenden Erfindung liegt daher die Aufgabe zugrunde, einen Ventilsack der eingangs erwähnten Art so auszubilden, dass er einfacher und kostengünstiger gefertigt werden kann und eine gute Funktionalität eines Ventilsacks aufweist.

Diese Aufgabe wird gemäß der vorliegenden Erfindung mit einem Ventilsack gemäß Anspruch 1.

Bei der herkömmlichen Ausbildung eines Sackbodens, beispielsweise eines Kreuzbodens, werden die Bodenklappen mit dem nicht mit dem Ventilschlauch versehenen Eckeinschlag und - im einander überlappenden Bereich der freien Enden der Bodenklappen - miteinander verklebt. Die Verklebung der Bodenklappen miteinander wird durch das ergänzend außen aufgeklebte Bodenabdeckblatt gesichert und verstärkt. Die Einfüllöffnung ist zwischen den Bodenklappen und dem Eckeinschlag ausgebildet, in dem ein zu einem flach liegenden Schlauch gefaltetes Blatt mit dem entsprechenden Eckeinschlag und den Bodenklappen verbunden wird. Beim Aufwölben des Bodens durch das Einführen eines Füllstutzens der Füllmaschine nimmt das schlauchförmige Ventilblatt eine runde bzw. ovale Form ein und bildet mit seiner Innenseite die Einfüllöffnung, die das Einfüllen des Füllmaterials durch den Füllstutzen hindurch in das Sackinnere ermöglicht.

Demgegenüber sind die erfindungsgemäßen Bodenklappen mit ihren überlappenden Enden über einen langen Bereich nicht miteinander verklebt. Die Bodenklappen bilden zusammen mit dem Bodenabdeckblatt, das somit nicht flächig mit den Bodenklappen verklebt ist, sondern lediglich im Bereich der Faltlinien der Bodenklappen durch Klebung fixiert ist, zusammen mit den Bodenklappen die Einfüllöffnung, wobei das Bodenabdeckblatt etwa die obere Hälfte der Einfüllöffnung und die Bodenklappen gemeinsam etwa die untere Hälfte der Einfüllöffnung ausbilden. Durch das Auswölben des Bodenabdeckblatts nach oben und der Bodenklappen nach unten überlappen die freien Enden der zueinander zeigenden Bodenklappen nicht mehr, sodass sich ein zum Sackinneren hin offener Schlitz bildet, durch den das Einfüllen des Füllguts in das Sackinnere durch den Füllstutzen hindurch erfolgt. Wird der Füllstutzen nach dem Befüllen aus der Einfüllöffnung herausgezogen, nehmen die Bodenklappen ihre Ursprungsstellung an, in der sie miteinander etwas überlappen, sodass die Öffnung zum Sackinneren in nunmehr durch die Bodenklappen verschlossen ist. Der Fülldruck des Füllguts bewirkt einen dauerhaften Verschluss des Bodens.

Der erfindungsgemäße Ventilsack erfüllt somit die gewünschte Ventilfunktion, ohne dass ein Ventilblatt zur Bildung eines schlauchförmigen Ventils in die Einfüllöffnung eingesetzt werden müsste. Vielmehr wird erfindungsgemäß das üblicherweise vorhandene Bodenabdeckblatt benutzt, um nunmehr zusammen mit der Oberseite der Bodenklappen gemeinsam die Einfüllöffnung auszubilden, wobei die Bodenklappen selbst eine sich selbst verschließende Öffnung zum Sackinneren ausbilden, wenn der Füllstutzen einer Füllmaschine in die Einfüllöffnung eingeschoben wird.

Die Ausbildung des zum Sackinneren hin offenen Schlitzes an den freien Enden der Bodenklappen durch das Einführen des Füllstutzens kann noch dadurch verbessert und in definierterer Form ablaufen, dass die Bodenklappen mit schlitzförmigen Einschnitten versehen sind, die einen durch die Füllröhre zum Sackinneren drückbaren Abschnitt der Bodenklappen begrenzen. Die Einschnitte sollten jedoch relativ kurz gehalten werden, damit eine ausreichende Rückstellkraft in den Abschnitten bestehen bleibt, um den durch das herunterdrücken der Bodenklappen durch den geöffneten Schlitz nach dem Herausziehen des Füllstutzens selbsttätig wieder zu verschließen.

Die Erfindung soll im Folgenden anhand eines in der Zeichnung dargestellten Ausführungsbeispiels näher erläutert werden. Es zeigen:
- Figur 1 -: ein schlauchförmiges Sackmaterial mit einem teilweise gelegten Boden und einem angeklebten Bodenabdeckblatt;
- Figur 2 -: eine schematische Darstellung eines fertig gelegten Bodens mit einem Bodenabdeckblatt in explodierter Darstellung;
- Figur 3 -: eine schematische Darstellung des auf dem gelegten Boden aufgebrachten Bodenabdeckblattes; und
- Figur 4 -: eine Ansicht eines erfindungsgemäß ausgebildeten Bodens vom Sackinneren aus gesehen.

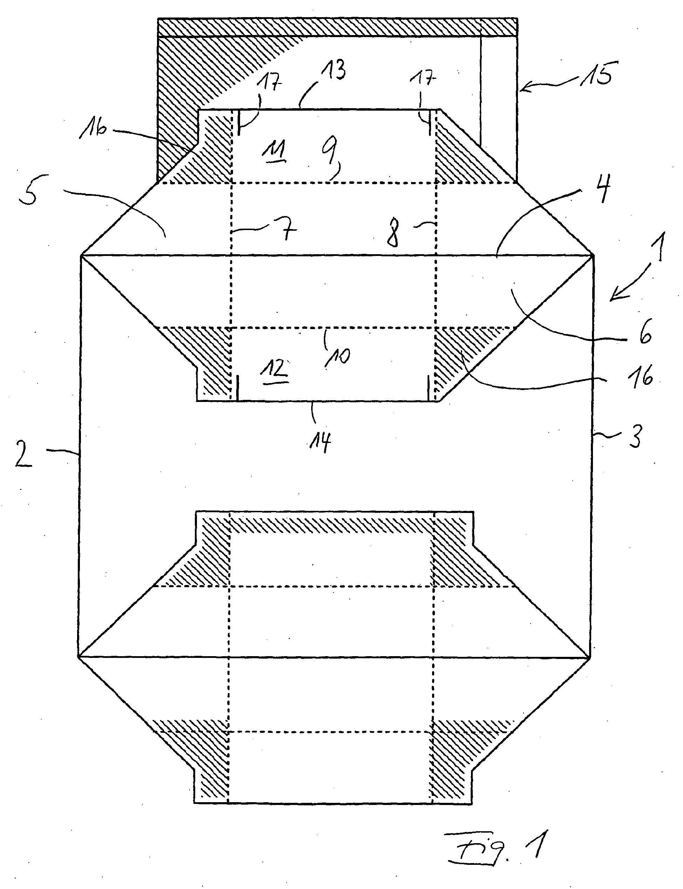

Figur 1 zeigt einen schlauchförmigen Mantel 1 eines Ventilsacks, der aus zwei flach aneinander liegenden Wandungsabschnitten besteht, die sich zwischen zwei in einer Längsrichtung des Sackes verlaufenden parallelen Seitenfaltenlinien 2, 3 erstrecken. Die in Figur 1 dargestellte obere Lage ist auf sich selbst entlang einer quer zur Längsrichtung verlaufenden Faltlinie 4 zurückgefaltet, während die in Figur 1 untere Lage sich flach liegend über die Faltlinie 4 hinaus erstreckt. Als erste Faltung für das Legen des Bodens sind Eckeinschläge 5, 6 von den Seitenfaltenlinien 2, 3 aus nach Innen eingeschlagen und erstrecken sich bis zu ihren freien Endkanten 7, 8 um quer zur Längsrichtung erstreckten Faltlinien 9, 10 sind Bodenklappen 11, 12 umklappbar, die mit ihren freien Kanten 13, 14 zur Bildung des Bodens dann aufeinander zeigen. Insoweit zeigt Figur 1 die Ausbildung eines herkömmlichen Kreuzbodens. An die obere Bodenklappe 11 ist außenseitig ein Bodenabdeckblatt 15 durch Klebung befestigt.

Figur 1 lässt ferner erkennen, dass die Eckeinschläge 5, 6 jeweils außen von den Faltlinien 9, 10, jedoch nicht im Bereich der Bodenklappen 11, 12 mit einem Klebstoffauftrag 16 versehen sind, der der Fixierung der Bodenklappen 11, 12 auf den Eckeinschlägen 5, 6 dient. Von den freien Kanten 13, 14 erstrecken sich ferner jeweils zwei Einschnitte 17 rechtwinklig zu den freien Kanten 13, 14 in das Material der Bodenklappen 11, 12 hinein.

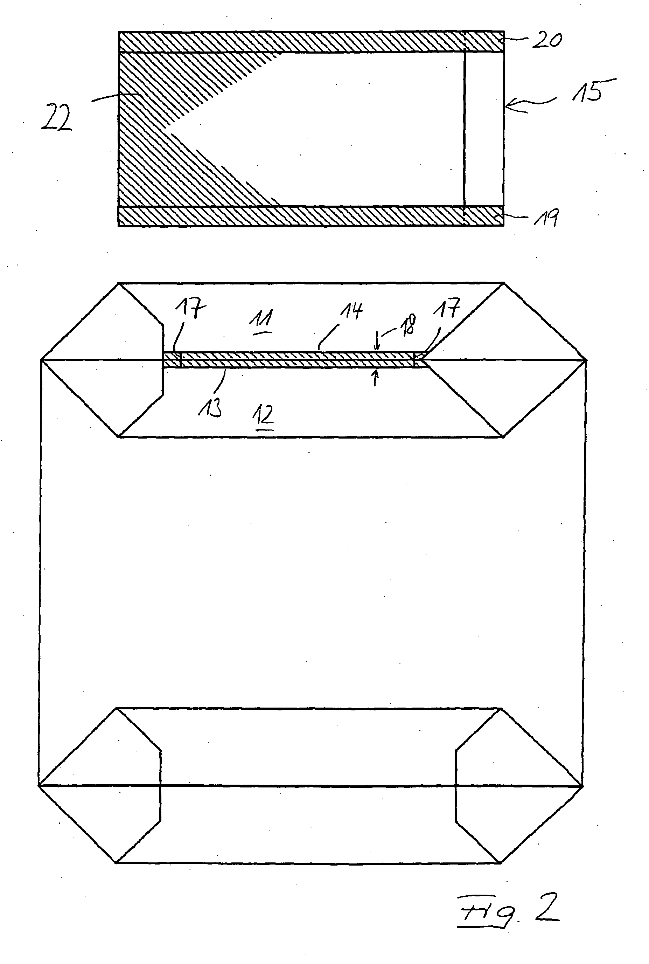

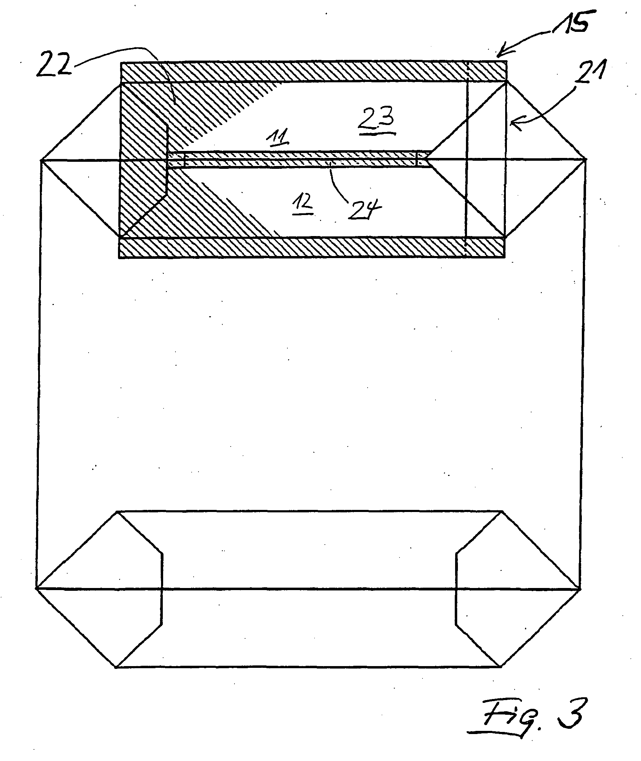

Figur 2 zeigt den fertig gelegten Boden mit den sich in einem mittleren Bereich 18 überlappenden Bodenklappen 11, 12. Das Bodenabdeckblatt 15 ist separat dargestellt. Es weist zwei sich über die Breite des Bodens in den Mantelbereich hinein erstreckende streifenförmige Abschnitte 19, 20 auf, die mit einem Klebstoff bestrichen sind, sodass das Bodenabdeckblatt 15 beidseitig des Bodens durch den Mantel des Ventilsacks befestigt ist und oberhalb der Bodenklappen 11, 12 eine Einfüllöffnung 21 mit dem Boden ausbilden kann, deren Lage Figur 3 verdeutlicht ist. Auf der der Einfüllöffnung 21 gegenüberliegenden Seite weist das Bodenabdeckblatt 15 ferner eine V-förmige flächige Verklebung 22 auf, mit der das Bodenabdeckblatt 15 auf die Oberseite des gelegten Bodens aufklebbar ist, und zwar derart, dass oberhalb des Bereichs 18 der überlappenden Bodenklappen 11, 12 ein klebstofffreier Aufnahmeraum 23 für einen Füllstutzen einer Füllmaschine gebildet ist. Der Aufnahmeraum 23 ist nach hinten spitz zulaufend durch die flächige Klebung 22 begrenzt.

Der so ausgebildete Boden wölbt sich mit dem Bodenabdeckblatt 15 nach oben und mit den beiden Bodenklappen 11, 12 nach unten, wenn der Füllstutzen einer Füllmaschine in die Einfüllöffnung 21 eingeführt wird. Durch die nach unten ausweichenden Bodenklappen 11, 12 öffnen die freien Kanten 13, 14 der Bodenklappen 11, 12 einen mittigen Schlitz 24 zwischen den Bodenklappen, der das Hindurchtreten von Füllgut aus dem Füllstutzen in das Sackinnere ermöglicht.

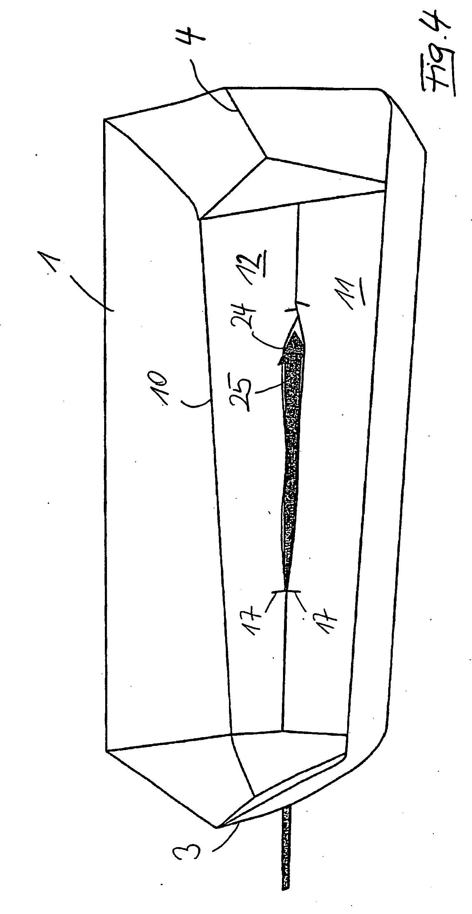

Figur 4 zeigt eine perspektivische Ansicht eines gelegten Bodens vom Sackinneren her gesehen. Dabei ist der sich unter der Einwirkung des Füllstutzens aufspreizende Schlitz 24 erkennbar, durch den Füllgut in das Sackinnere gelangen kann, wie dies durch den Pfeil 25 verdeutlicht ist. Figur 4 verdeutlicht die Mantel 1 des durch das Legen des Bodens gebildeten Sack in Kubusform mit abgeschnittenen Mantelwandungen, um den Boden vom Sackinneren her erkennbar werden zu lassen.

Die Figur 4 verdeutlicht ferner, dass der sich aufspreizende Schlitz 24 von den Einschnitten 17 beidseitig in seiner Länge begrenzt wird und dass die Einschnitte 17 das Aufspreizen des Schlitzes 24 erleichtern.

Es hat sich gezeigt, dass der so ausgebildete Ventilsack ein sauberes und ungewöhnlich wenig ausstaubendes Befüllen auch mit staubigem Füllgut ermöglicht, insbesondere wenn die V-Verklebung 22 zwischen Bodenabdeckblatt 15 und Boden zur Begrenzung des Aufnahmeraums 23 für den Füllstutzen vorgesehen ist.

Es ist erkennbar, dass die Ventilfunktion aus dem Material der Sackwandung heraus realisiert wird, ohne dass ein Ventilblatt, wie ein herkömmliches schlauchförmiges Ventilblatt, eingelegt und eingeklebt werden müsste.

## Patentansprüche

1. Ventilsack mit einem in einer Längsrichtung schlauchförmigen Mantel (1), der an wenigstens einem Ende mit einem mit Bodenklappen (11, 12) gebildeten Boden abgeschlossen ist, wobei die Bodenklappen (11, 12) vom Mantel (1) an quer zur Längsrichtung verlaufenden Faltlinien (9, 10) zueinander zeigend abgewinkelt sind und sich mit ihren freien Endkanten (13, 14) überlappen, mit einem die Bodenklappen (11, 12) überdeckenden, aufgeklebten Bodenabdeckblatt (15) und mit einer im Boden ausgebildeten und einen Dürchgang zum Sackinneren herstellenden Einfüllöffnung (21), die auf einen Füllstutzen einer Füllmaschine aufschiebbar ist **dadurch gekennzeichnet, dass** die Einfüllöffnung (21) zwischen dem Bodenabdeckblatt (15) und den Bodenklappen (11, 12) ausgebildet ist, dass die Bodenlappen mit ihren überlappenden Enden über einen langen Bereich nicht miteinander verklebt sind, und dass die Überlappung der Bodenklappen (11, 12) so gering ist, dass zwischen den freien Endkanten (13, 14) der Bodenklappen (11, 12) ein zum Sackinneren hin offener Schlitz (24) gebildet wird, wenn die Bodenklappen (11, 12) durch den in die Füllöffnung (21) eingeschobenen Füllstutzen zum Sackinneren gedrückt werden.

2. Ventilsack nach Anspruch 1, **dadurch gekennzeichnet, dass** die Bodenklappen (11, 12) mit schlitzförmigen, einen durch den Füllstutzen zum Sackinneren drückbaren Abschnitt der Bodenklappen (11, 12) begrenzenden Einschnitten (17) versehen sind.

3. Ventilsack nach Anspruch 1 oder 2, **dadurch gekennzeichnet, dass** das Bodenabdeckblatt (15) streifenförmig an dem Mantel (1) jenseits der Faltlinien (9, 10) der Bodenklappen (11, 12) durch Klebung fixiert ist.

4. Ventilsack nach einem der Ansprüche 1 bis 3, **dadurch gekennzeichnet, dass** das Bodenabdeckblatt (15) von der Einfüllöffnung (21) aus gesehen zum Ende des sich öffnenden Schlitzes (24) hin eine Verklebung (22) aufweist, die einen spitz zulaufenden Aufnahmeraum (23) für einen Füllstutzen definiert.

5. Ventilsack nach einem der Ansprüche 1 bis 4, **dadurch gekennzeichnet, dass** der Boden zu einem Kreuzboden gefaltet ist.

## Claims

1. Valve bag comprising a casing (1), which is tubular in longitudinal direction and closed at at least one end by a base formed by base flaps (11, 12), wherein the base flaps (11,12) are bent from the casing (1) so as to point towards one another along fold lines (9,10) perpendicular to the longitudinal direction and so that their free end edges (13, 14) overlap, and comprising a glued-on base cover sheet (15) covering the base flaps (11, 12) and a filling opening (21), which is formed in the base and creates a passage to the interior of the sack, so that said filling opening can be pushed onto a filling nozzle of a filling machine, **characterized in that** the filling opening (21) is formed between the base cover sheet (15) and the base flaps (11, 12), **in that** the overlapping ends of the base flaps do not adhere to one another over a long section, and **in that** the overlapping of the base flaps (11, 12) is so slight that a slot (24), which is open towards the interior of the sack, is formed between the free-end edges (13, 14) of the base flaps (11, 12), when the base flaps (11, 12) are pushed into the interior of the sack through the filling nozzle that is pushed into the filling opening (21).

2. Valve bag according to claim 1, **characterized in that** the base flaps (11, 12) are provided with slot-shaped incisions (17), which delimit a section of the base flaps (11, 12) that can be pushed to the interior of the sack by the filling nozzle.

3. Valve bag according to claim 1 or 2, **characterized in that** the base cover sheet (15) is secured strip-like by adhesion to the casing (1) on the other side of the fold lines (9, 10) of the base flaps (11, 12).

4. Valve bag according to one of claims 1 to 3, **characterized in that** the base cover sheet (15) has an adhesion (22) which, as viewed from the filling opening (21), extends towards the end of the opening slot (24) and defines a conically tapering receiving space (23) for a filling nozzle.

5. Valve bag according to one of claims 1 to 4, **characterized in that** the base is folded into a cross bottom base.

## Revendications

1. Sac à valve avec un manteau (1) en forme de tube dans une direction longitudinale, qui est fermé à au moins une extrémité par un fond réalisé par des volets de fond (11, 12), dans lequel les volets de fond (11, 12) sont repliés l'un vers l'autre à partir du manteau (1) selon des lignes de pliage (9, 10) courant perpendiculairement à la direction longitudinale et se recouvrent par les bords (13, 14) de leurs extrémités libres, avec une feuille de couverture de fond (15) collée sur les volets de fond (11, 12) en recouvrement, et avec une ouverture de remplissage (21), réalisée dans le fond et formant un passage vers l'intérieur du sac, qui peut être enfilée sur la trémie de remplissage d'une machine de remplissage, **caractérisé en ce que** l'ouverture de remplissage (21) est réalisée entre la feuille de couverture du fond (15) et les volets de fond (11, 12), que les extrémités en recouvrement des volets de fond ne sont pas collées l'une avec l'autre dans une région longitudinale, et que le recouvrement des volets de fond (11, 12) est suffisamment faible pour former entre les bords (13, 14) des extrémités libres une fente (24) ouverte menant à l'intérieur du sac quand les volets de fonds (11, 12) sont poussés vers l'intérieur du sac par l'enfilage de la trémie de remplissage dans l'ouverture de remplissage (21).

2. Sac à valve selon la revendication 1, **caractérisé en ce que** les volets de fond (11, 12) sont munis d'incisions (17) en forme de fentes délimitant une portion des volets de fond (11, 12) imprimable à travers l'ouverture de remplissage de l'intérieur du sac par la trémie de remplissage.

3. Sac à valve selon l'une quelconque des revendications 1 ou 2, **caractérisé en ce que** la feuille de couverture du fond (15) est fixée par collage linéaire sur le manteau (1) au delà des lignes de pliages (9, 10) des volets de fond (11, 12).

4. Sac à valve selon l'une quelconque des revendications 1 à 3, **caractérisé en ce que** la feuille de couverture de fond (15) présente un collage (22) prévu depuis l'entrée de remplissage (21) jusqu'à la fin des fentes (24) ouvrantes, qui définit en forme de pointe un espace d'accueil (23) de la trémie de remplissage.

5. Sac à valve selon l'une quelconque des revendications 1 à 4, **caractérisé en ce que** le fond est plié en fond croisé.
